# EUROPEAN PATENT APPLICATION

(11) **EP 2 315 411 A1**
(43) Date of publication of application: **27.04.2011**
(21) Application number: 10151765.4
(22) Date of filing: 27.01.2010
(51) Int. Cl.: H04L 29/06, G06F 17/27, H04L 29/08, H04L 29/12, H04M 7/00

(54) **A system for communication from a file**

(30) Priority: 22.10.2009 US 253952
(71) Applicant: Benoliel, Micha, London, W2 4DS (GB)
(72) Inventor: Benoliel, Micha, London, W2 4DS (GB)
(74) Representative: Plougmann & Vingtoft A/S

(57) **Abstract**

A system for a communication between a requester and a destination from a file. The system comprises client computing-device adapted to at least one of the following: to output a file containing an identifier identifying an entity to the requester, to send a first instruction associated with a first communication and receive a second instruction associated with a second communication; a server adapted to receive the first instruction, to send to the client a second instruction associated with the first communication, to send a third instruction associated with the first communication towards the destination; wherein the client is adapted to detect the identifier identifying the entity, to generate a selection including at least one communication means corresponding to the entity or to the identifier associated with the entity, to provide the selection to the requester, to receive from the requester a choice of a communication means selected among the provided communication means, to initiate the communication between the requester and the destination associated with the entity or with the identifier; wherein if the communication is established successfully between the requester and the destination associated with the entity or with the identifier, the communication is routed towards the destination.

## Description

### A system for a communication from a file

### FIELD OF THE INVENTION

Generally, the present invention lies within the field of communication technology, in particular within the field of Internet and voice convergence. Specifically, the invention provides a system and a method for communication from a requester to a destination associated with an entity, the communication being initiated from a file.

### BACKGROUND OF THE INVENTION

Telecommunication technology, Internet-based technology, and technology optimizing business processes are not able to be fully intertwined to provide a user experience that unleashes the potential of these technologies to a level beyond the one experienced today. More and more network-based (i.e. Intranet, Internet) services offered to and by individuals and companies require or would highly benefit from an interaction with a person, e.g. for providing an expert answer, selling a product or service or contacting a family member. Applications optimizing business processes such as collaboration tools or simply processing a document prepared by or involving another person would highly benefit from a direct interaction with a person like a colleague or a business partner. In this context, it is especially crucial to provide voice communication for services or activities demanding a fast response with precision whether within the same organization, across organizations, privately, or for emergency situations. The existing applications whether network-based or optimizing processes do not provide the same level and quality of service and interaction on a computer as on a telecommunication device such as a mobile phone. Moreover none of these applications are able to offer a seamless voice communication experience, directly from the file or a webpage.

Hence, an improved communication system allowing a requester to communicate directly from a file with an entity identifiable on the same file would be advantageous, and in particular a more reliable, seamless, battery-efficient solution on various platforms, e.g. computer and mobile phone would be advantageous.

### OBJECT OF THE INVENTION

In particular, it may be seen as an object of the present invention to provide a communication system that solves the above mentioned problems with a direct communication from a file with an entity identified on the same file.

### SUMMARY OF THE INVENTION

Thus, the above described object and several other objects are intended to be obtained in a first aspect of the invention by providing a system for a communication between a requester and a destination, said system comprising:
a. a client computing-device adapted to at least one of the following:
   i. to output a file containing an identifier identifying an entity to the requester,
   ii. to send a first instruction associated with a first communication and receive a second instruction associated with a second communication,
b. a server adapted:
   i. to receive the first instruction,
   ii. to send to the client a second instruction associated with the first communication,
   iii. to send a third instruction associated with the first communication towards the destination;
c. wherein the client is adapted
   i. to detect the identifier identifying the entity,
   ii. to generate a selection including at least one communication means corresponding to the entity or to the identifier associated with the entity,
   iii. to provide the selection to the requester,
   iv. to receive from the requester a choice of a communication means selected among the provided communication means,
   v. to initiate the communication between the requester and the destination associated with the entity or with the identifier;
d. wherein if the communication is established successfully between the requester and the destination associated with the entity or with the identifier, the communication is routed towards the destination.

The invention is particularly, but not exclusively, advantageous for obtaining ability to reach an entity fast, increased productivity, usability, and enriched user experience with seamlessness of the communication.

In a second aspect, the invention relates to a method of communication between a requester and a destination, said method comprising:
a. Outputting a file containing an identifier identifying an entity to the requester;
b. Detecting the identifier identifying an entity,
c. Generating a selection including at least one communication means corresponding to the entity or to the identifier associated with the entity,
d. Providing the selection to the requester;
e. Receiving from the requester a choice of a communication means among the provided communication means,
f. Initiating the communication between the requester and the destination associated with the entity or with the identifier; and if the communication is established successfully between the requester and the destination associated with the entity or with the identifier,
g. Routing the communication towards the destination.

In a third aspect, the invention relates to a requester apparatus for communication between a requester and a destination, said apparatus comprising:
a. A computing device,
b. A communication means for at least one of the following:
   i. receiving a file containing an identifier identifying an entity,
   ii. sending a first instruction associated with a first communication and receive a second instruction associated with a second communication,
c. A means for outputting the file to the requester,
d. A means for detecting the identifier identifying the entity,
e. A means for generating a selection including at least one communication means corresponding to the entity or to the identifier associated with the entity,
f. A means for providing the selection to the requester among the provided communication means;
g.A means for receiving from the requester a choice of a communication means among the provided communication means,
h. A means for initiating the communication between the requester and the destination associated with the entity or with the identifier;
i. A means for performing the communication towards the destination.

In a fourth aspect, the invention relates to a destination apparatus for communication between a requester and a destination, said apparatus comprising:
a. A computing device,
b. A communication means for :
   iii. receiving a first instruction associated with a communication and sending a second instruction associated with the communication,
   iv. receiving the communication.

In a fifth aspect, the invention relates to a server for communication between a requester and a destination said server comprising:
i. A means for receiving a first instruction associated with the first communication from the requester,
ii. A means for processing the first instruction,
iii. A means for sending to the requester a second instruction associated with the first communication,
iv. A means for sending a third instruction associated with the first communication towards the destination;

In a sixth aspect, the invention relates to an Integrated circuit (IC) for causing an apparatus to perform a method according to the second aspect of the invention.

In a seventh aspect, the invention relates to a computer program product being adapted to enable a computer system comprising at least one computer having data storage means in connection therewith to control an apparatus according to the second aspect of the invention.

This aspect of the invention is particularly, but not exclusively, advantageous in that the present invention may be accomplished by a computer program product enabling a computer system to carry out the operations of the system of the first aspect of the invention when down- or uploaded into the computer system. Such a computer program product may be provided on any kind of computer readable medium, or through a network.

The individual aspects of the present invention may each be combined with any of the other aspects. These and other aspects of the invention will be apparent from the following description with reference to the described embodiments.

### BRIEF DESCRIPTION OF THE FIGURES

The system, method, apparatus and computer program according to the invention will now be described in more detail with regard to the accompanying figures. The figures show one way of implementing the present invention and is not to be construed as being limiting to other possible embodiments falling within the scope of the attached claim set.
Figure 1 shows the architecture 100 illustrating elements comprised in the systems for communicating from a file 103 stored on a client to an entity.
Figure 2 shows a flowchart illustrating an exemplary implementation of the present invention.
Figure 3 shows an exemplary implementation of the present invention from a document.
Figure 4 shows an exemplary implementation of the present invention from a webpage
Figure 5 shows an exemplary implementation of the present invention from a webpage.

### DETAILED DESCRIPTION OF AN EMBODIMENT

In accordance with the invention there is provided a system, a method, a requester apparatus, a destination apparatus, a server, a integrated circuit, a computer program for communicating with an entity from a file.

As used herein the term "client" refers to a computing device which is a computer comprising an application or a system that can access remotely a service on another computer system which processes a request, referred herein to as a "server", potentially via a communication network. The client computing device may also access remotely a service, via a multi-hop ad hoc network or a peer-to-peer network, on another client computing device that is not only dedicated to performing server tasks. The client computing device is adapted to at least one of the following:
- to receive a file containing an identifier identifying an entity,
- to store a file,
- to output the file for interaction with the requester,
- to send a first instruction (e.g. a request) associated with a first communication and and receive a second instruction associated with a second communication.

The first and second communications may be the same.
The server is adapted to at least one of the following:
- to receive a first instruction associated with the first communication from the client,
- to process the first instruction,
- to send to the client a second instruction associated with the first communication,
- to send a third instruction associated with the first communication towards the destination.
The first and third instructions associated with the first communication may be the same or similar.

The first instruction may be for example a communication request (e.g. SIP INVITE), the second instruction may be e.g. an acknowledgment of the request (e.g. SIP 2000K), the third instruction may be e.g. a communication request (e.g SIP INVITE, H.323 message, SS7 message ) forwarded to another server by the receiving server.

A client computing device is e.g. a computer, a portable computer, a mobile phone, a smart phone, a notebook, a hand-held computing device, a digital book, a portable digital assistant, a music or video player with a display screen and a communication capability, a camera with a display screen and a communication capability, a home-dedicated communication device, a television, a DVD player, a game console or any combination thereof. The server can be part of a cluster comprising a plurality of servers to guarantee reliability and availability of the system.

As used herein the term "requester" refers to a client computing device that requests a communication with an entity, possibly via a destination associated with the entity. The requester may also refer to an individual or a group of individuals operating a client computing device that is used in a communication request.

As used herein the term "destination" refers to a computing device that is connectable to the requester when associated with the entity that the requester requests to establish a communication with. According to the invention, the entity to be contacted may or may not be associated with a destination. The said destination is adapted:
a. to send a first instruction associated with a communication and receive a second instruction associated with the communication,
b. to accept and take part in the communication.

As used herein the term "entity" refers to a material existence. An entity is e.g an individual, a group of individuals, a community, a company, an organization, a department, a machine, an object with a communication capability or in association with a communication device, a sensor, a building with a communication capability or in association with a communication device, or any combination thereof.

As used herein the term "identifier" refers to an expression that uniquely identifies an entity in a structure of reference. An identifier associated with an entity is such as a name, a first name, a last name, a nickname, a surname, initials, a pseudonym, a username, a symbol, a network identifier, a network address, an IP address, an IPv6 address, a hardware address, a MAC address, a token, a number, a port number, a phone number, a VoIP identifier, a domain name, a Uniform Resource Identifier, a SIP URI, a Uniform Resource Locator, a Uniform Resource Name, an EXtensible Resource Identifier, an i-name, an i-number, an instant messaging identifier, an address, an electronic mail address, an entry in an online directory, an entry in a .tel indexation, an image, an avatar, a webpage, a personal webpage, a webpage with a virtual post board, an interactive webpage, a blog, an online profile, a webpage on a social network webpage, or any combination thereof.

According to the invention, for example, an individual acting as a requester through a client computing device that wants to communicate with an individual acting as an entity mentioned in a document (being a file here) and identified by the present invention thanks to an identifier (e.g. a name) can select a communication mean to contact the desired entity thanks to the present invention proposing him to select a communication mean among a list of means generated by the invention, initiating the communication with the destination of the entity, and finally routing the communication. All of this can be directly from the document.

As used herein the term "file" refers to a block of arbitrary information, or a resource for storing information, which is available to a computer program. A file may have the form of sequence of bytes. A file is e.g. a document, an electronic document, an electronic file, a media file, a webpage, an executable file or any combination thereof. The file may be a document in paper that has been processed into an electronic document. The file may comprise a plurality of media, or may be associated with a plurality of media files, or a plurality of multimedia files or a combination thereof.

The file stored on the client may be retrieved from a remote host, a server, a client computing device, a plurality of client computing devices or any combination thereof. The file may be temporarily stored in a volatile memory (e.g. Random Access Memory type of memory) or on a non-volatile memory (e.g. Read Only Memory type of memory) of the client computing device for the purpose of the present invention.

According to the invention, outputting the file to or for interaction with the requester comprises displaying the file to the requester on a display screen, sending the identifier and other information related to the desired communication or task to a requester, emitting an audible sound, generating text-to-speech. The interaction with the requester may take place using a speech recognition technique.

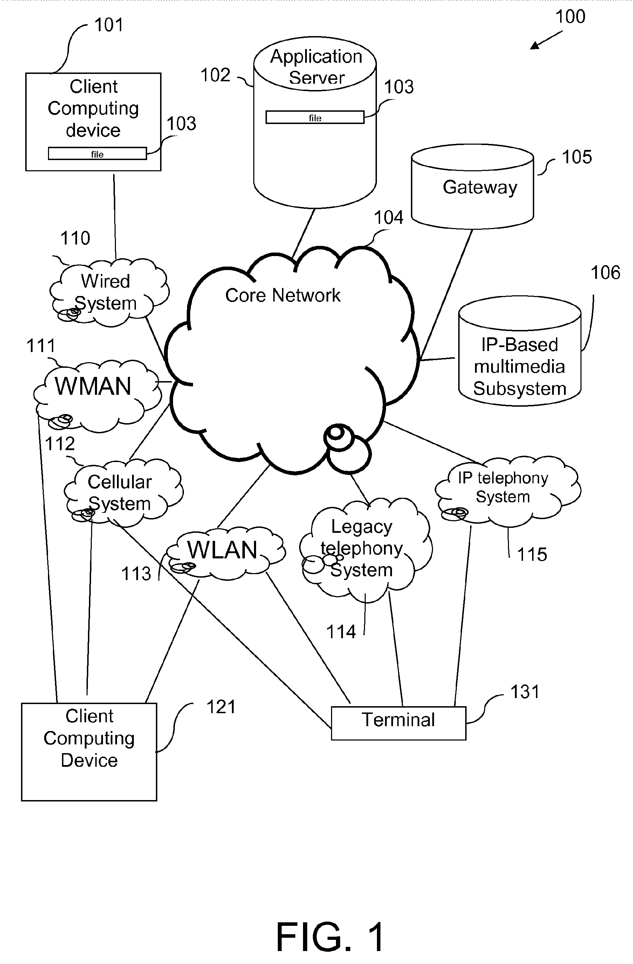

Figure 1 shows the architecture 100 illustrating elements comprised in the systems for communicating from a file 103 stored on a client to an entity: client computing devices 101, 111, a terminal 121, an application server 102 storing file 103, a gateway 105, an IP-based multimedia subsystem 106 comprising a plurality of servers and a core network 104 and a plurality of access networks 113 that can connect elements 102, 105, and 106. The terminal 121 is a client computing device such as a fixed phone, a cordless phone, a mobile phone, an IP phone, a soft-phone installed on a computing device, or any combination thereof.

A client computing device 101 may connect to any access networks 120. The access network is e.g. a wired system 110, a cable network (e.g. DSL, ADSL network), a power line network, a photonic or optical network (e.g. fiber to the x FFTx, FFTN, FFTC, FFTB, FFTH, 802.8, 10 Gigabit Ethernet, Gigabit Ethernet, Synchronous Digital Hierarchy, Synchronous Optical Networking), a Local Area network (e.g. Ethernet, 802.3, 802.2, 802.1, 802.4, 802.5, Token Ring), a metropolitan area network (e.g. 802-2001 , 802.6, ATM), a cellular system 112 (e.g. 2G, 3G, 4G, GSM, GPRS, EDGE, UMTS, CDMA2000, HSPA, LTE, NGN), a wireless local area network 113 (e.g. Wifi, 802.11, , HiperLAN), a wireless metropolitan area network 111(e.g. 802.16 WiMAX, HiperMAN), a mobile broadband wireless access network (e.g. 802.20), a wireless personal area network (e.g. Bluetooth, Infrared, 802.11, 802.15, UWB), a high attitude platform network, a satellite network (e.g. GPS, GNSS, DVB), a broadcasting network (e.g. television network), a Personal Handy-phone System (PHS) network, a point-to- point network, an ad hoc network, a multi-hop ad hoc network, a peer-to-peer network, a sensor network (e.g. RFID system, near-field communication network), a legacy telephony system 114 (e.g. PSTN network, ISDN network), an Internet Protocol telephony system 115 (e.g. SIP-based network, H.323-based network), a circuit-switched network, a packet-switched network, a private network, a virtual network, a cooperative communication network, a relay network, a cognitive radio network, a grid computing network or any combination thereof.

Means for routing the communication across a network comprises a router, a switch, a firewall, a server, a gateway, an authentication authorization and accounting infrastructure, a billing and charging server, a registrar server.

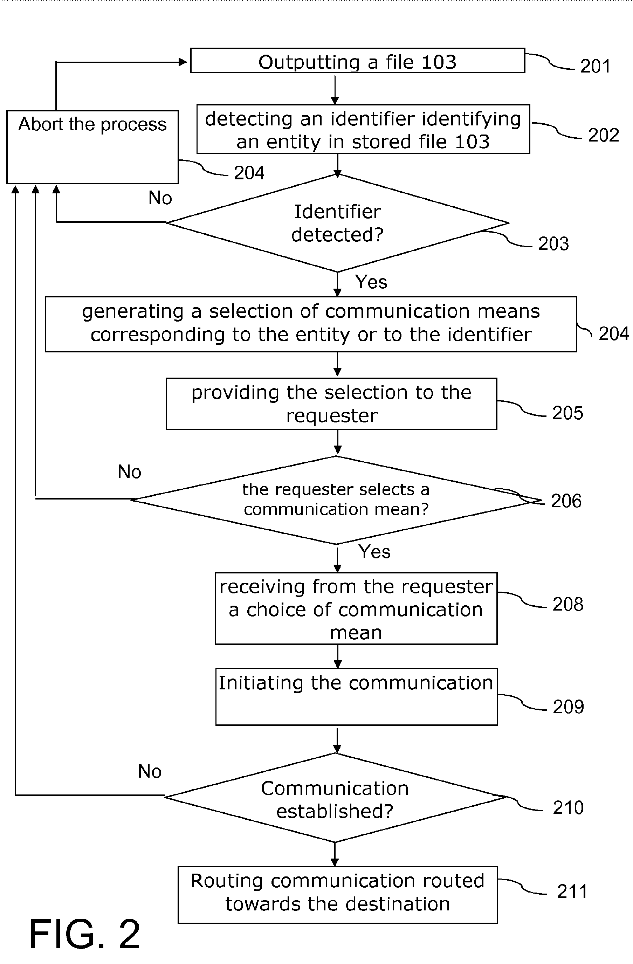

Figure 2 shows a flowchart illustrating an exemplary implementation of the present invention. According the present invention, the client retrieves a file from a remote server or host and stores the file 103 temporarily or permanently. The present invention is not limited to retrievable files from hosts but also covers a file stored on the computing device prior to any retrieval. At step 201, the client outputs the file to the requester. At step 202, the client processes the stored file 103 to detect an identifier identifying an entity in the stored file 103. At step 203 the client verifies that an identifier is detected. If an identifier is detected in the file 103 stored on the client, the client proceeds to step 204 to elaborate a selection including at least one communication means corresponding to the entity or to the identifier associated with the entity. If the selection list is empty, the client aborts the ongoing process implemented according to the invention. If the selection comprises at least one communication means, the client proposes to the requester the elaborated selection of communication means at step 205. The client awaits the requester to choose a communication mean in the proposed selection at step 206. If the requester selects a communication means among the at least one communication mean proposed in the selection, the client receives the requester's choice of a communication means at step 208, and initiates at step 209 the communication with the entity associated with the identifier using the communication means selected. If the communication is established successfully between the requester and the destination associated with the entity or the identifier at step 210, the communication is conveyed or routed towards the destination at step 211, possibly across a communication network. If the communication is not established successfully between the requester and the destination associated with the entity or the identifier at step 210, the client retries to initiate the communication according to a retransmission scheme of the signalling protocol. If the communication is not established successfully between the requester and the destination associated with the entity or the identifier at step 210, the client proposes a different communication or initiates another communication using a different communication. For example, if a voice communication cannot be established, a voicemail may be recorded or a speech-to-text process may be initiated and a communication with a short-message service or an email can be performed. Other types of trials and communication means conversion can be performed among e.g. the communication means described below.

According to the invention, the communication means comprises:
a. A means for initiating and performing a synchronous voice communication, such as a call, a voice call, a video call, a conference call, or any combination thereof,
b. A means for sending a synchronous text communication, such as an instant message, an interactive message, a desktop sharing, a dashboard sharing or any combination thereof ,
c. A means for initiating and performing a synchronous text and voice communication, such as an instant message, an interactive message, a call, a voice call, a video call, a conference call, a desktop sharing, a dashboard sharing, or any combination thereof,
d. A means for initiating and performing an asynchronous voice communication, such as a voice mail, a voice mail associated with a message, a voice mail associated with an electronic mail, or any combination thereof,
e. A means for sending an asynchronous text communication, such as a short message service message, an electronic mail, a post on a board of a webpage, a webpage dedicated to feedback or any combination thereof,
f.A means for initiating and performing a video communication, such as a video-mail, a video call, or any combination thereof,
g.A means for sending a file,
h. A means for accessing or opening a webpage, such as a personal webpage, a webpage with a virtual post board, an interactive webpage, a blog, an online profile, a webpage on a social network webpage, or any combination thereof,
i. A means for anonymous communication.
The destination of a synchronous voice communication is a device with a communication capability. The said device with a communication capability is adapted to receive a synchronous voice communication and/or an alert informing about an incoming synchronous voice communication on a file, a webpage, an interactive webpage, a blog, an online profile, a webpage on a social network webpage, an instant messaging software, a voice communication software or any combination thereof.

The destination of an asynchronous voice communication is a device with a communication capability. The said device with a communication capability is adapted to receive an asynchronous voice communication and/or an alert informing about an incoming asynchronous voice communication on a file, a webpage, an interactive webpage, a blog, an online profile, a webpage on a social network webpage, an instant messaging software, a voice communication software or any combination thereof.

Initiating a communication comprises obtaining information corresponding to an identifier associated with an entity or a destination of an entity, a signalling protocol and a routing of the communication request. The identifier associated with a communication destination may be an identifier associated with an entity. The initiation of a communication according to the invention may include a Direct Inward Dialling, an establishment of a bridge, a communication forwarding such as a call forwarding.

According to the invention, the process of elaborating a selection of communication means comprises providing presence (possibly enriched with context information relating to the entity), location information and status (e.g. online, offline, busy, free, away, do not disturb) of the entity to be contacted, and providing a matching metric that informs the requester on how much the communication means to be proposed and the information presented about the entity matches with the entity. The elaboration of the selection of communication means can based on the publicly available information about the identifier of the entity on:
- An online directory (e.g. .tel indexation, white and yellow pages),
- a digital address book stored on the client (after being retrieved or not, such as instant messaging contacts, social network-based contacts, contacts stored on the client and the client's personal area network devices),
- context information,
- the matching metric.

One way to calculate a matching metric such as a match percentage is by considering the following:
- the location of the available information about the identifier of the entity in the data information infrastructure: e.g. on a webpage, a website, an online directory (e.g. .tel indexation, white and yellow pages), a digital address book stored on the client (after being retrieved or not, such as instant messaging contacts, social network-based contacts, contacts stored on the client and the client's personal area network devices),
- context information,
- the uniqueness of the identifiers based on e.g the context or a reference infrastructure, and
- the overlapping derived between various digital social networks and spheres and the data information infrastructure.

According to the invention, the elaboration of a selection of communication means further comprises the consideration of a privacy setting associated with an entity to be contacted based on the relational context between the entity and the requester. The privacy setting associated with an entity to be contacted may correspond to the privacy setting configured by an entity on a webpage or a webpage on a social network towards the requester, if any setting is available there. The consideration of a privacy setting associated with an entity to be contacted may be performed based on mapping the position of the requester on one or more constellations resulting from a social network analysis.

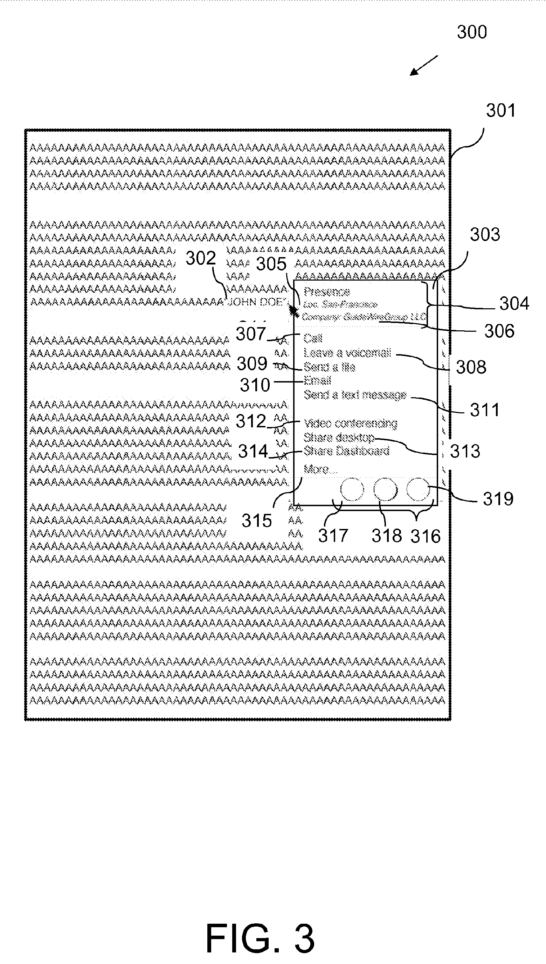

Figure 3 shows an exemplary implementation of the present invention from a document. A document 301 is processed by a requester on a client computing device. The processing according to the present invention results in detecting an identifier 302, "John Doe", associated with an entity (e.g. individual John Doe). A selection 303 of communication means corresponding to the entity or to the identifier associated with the entity is therefore elaborated according to an aggregation scheme and proposed to the requester. In this example, the aggregation scheme gathers data information related to the individual based on e.g. the digital address books available on the client computing device, or in a remote location such as a network-based (e.g. intranet, internet) address book or directory. The exemplary selection 303 includes:
- a presence field 304 consisting of the location 305 and the company of the entity 306
- communication means: placing a call 307, leaving a voicemail 308, sending a file 309, sending an email 310, sending a text message 311, video conferencing 312, sharing a desktop 313, sharing a dashboard 314, a button linking to more means 315, and opening a webpage 316 with a link to a profile 317, to social network page 318, and a .tel domain 319.

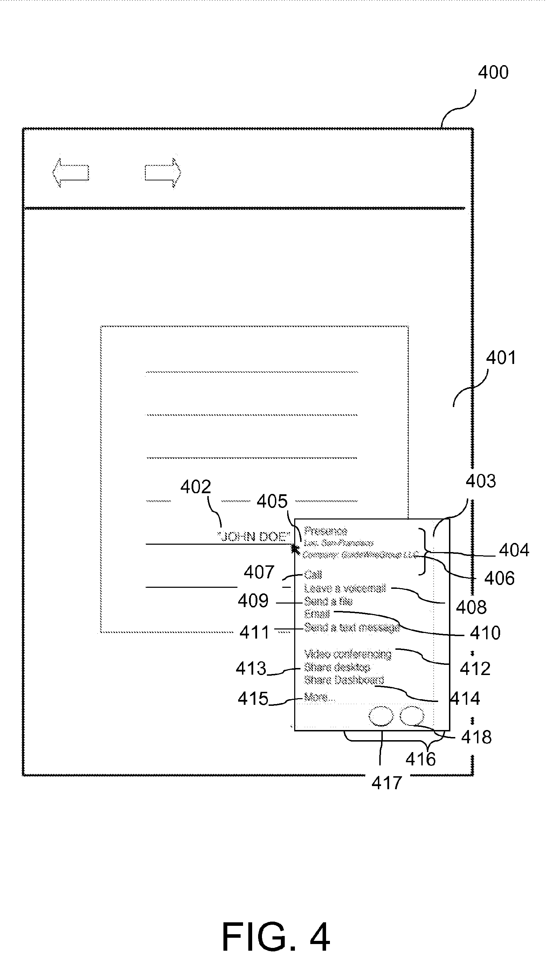

Figure 4 shows an exemplary implementation of the present invention from a webpage on e.g. a social network. A webpage 401 is processed in a browser 400 by a requester. The processing according to the present invention results in detecting an identifier 402, "John Doe", associated with an entity (e.g. individual John Doe). A selection 403 of communication means corresponding to the entity or to the identifier associated with the entity is therefore elaborated according to the present invention and proposed to the requester. In this example, the aggregation scheme gathers data information related to the individual based on e.g. the digital address books available on the client computing device, or in a remote location such as a network-based (e.g. intranet, internet) address book or directory. The exemplary selection 403 includes:
- a presence field 404 consisting of the location 405 and the company of the entity 406
- communication means: placing a call 407, leaving a voicemail 408, sending a file 409, sending an email 410, sending a text message 411, video conferencing 412, sharing a desktop 413, sharing a dashboard 414, opening a webpage 416 with a link to a profile 417, and to social network page 418, and a button linking to more means 415,.

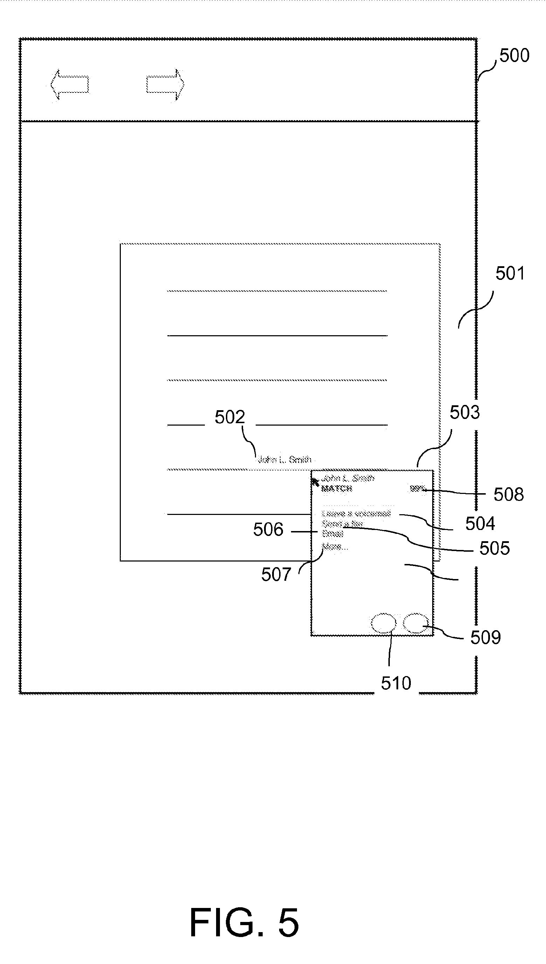

   Figure 5 shows an exemplary implementation of the present invention from a webpage. A webpage 501 is processed in a browser 500 by a requester. The processing according to the present invention results in detecting an identifier 502, "John Doe", associated with an entity (e.g. individual John Doe). A selection 503 of communication means corresponding to the entity or to the identifier associated with the entity is therefore elaborated according to the present invention and proposed to the requester. In this example, the requester is not in the social sphere of the individual to be contacted and therefore does not have access to data related to the individual. Therefore the aggregation scheme gathers data information related to the individual based on available communication identifiers associated with the individual on a network (e.g. internet or the current webpage or website) or an online directory. A match percentage is also given in the selection elaborated based on criterias such as the location of the identifier (i.e. if it is on the same webpage or website, the percentage would be high) and those given above. The exemplary selection 503 includes:
- a match percentage 508,
- communication means: leaving a voicemail 504, sending a file 505, sending an email 506, opening a webpage 509 related to the individual or a profile 510 or both and, a button linking to more means 507.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. The term "associated with" may be interpreted as "representing", "corresponding to", "relating to" or any other non-limiting interpretation. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A system for a communication between a requester and a destination, said system comprising:
a. a client computing-device adapted to at least one of the following:
i. to output a file containing an identifier identifying an entity to the requester,
ii. to send a first instruction associated with a first communication and receive a second instruction associated with a second communication;
b. a server adapted:
i. to receive the first instruction,
ii. to send to the client a second instruction associated with the first communication,
iii. to send a third instruction associated with the first communication towards the destination;
c. wherein the client is adapted
i. to detect the identifier identifying the entity,
ii. to generate a selection including at least one communication means corresponding to the entity or to the identifier associated with the entity,
iii. to provide the selection to the requester,
iv. to receive from the requester a choice of a communication means selected among the provided communication means,
v. to initiate the communication between the requester and the destination associated with the entity or with the identifier;
d. wherein if the communication is established successfully between the requester and the destination associated with the entity or with the identifier, the communication is routed towards the destination.

2. A system according to claim 1 wherein the identifier associated with an entity is selected from a group consisting of a name, a first name, a last name, a nickname, a surname, initials, a pseudonym, a username, a symbol, a network identifier, a network address, an IP address, an IPv6 address, a hardware address, a MAC address, a token, a number, a port number, a phone number, a VoIP identifier, a domain name, a Uniform Resource Identifier, a SIP URI, a Uniform Resource Locator, a Uniform Resource Name, an EXtensible Resource Identifier, an i-name, an i-number, an instant messaging identifier, an address, an electronic mail address, an entry in an online directory, an entry in a .tel indexation, an image, an avatar, an image, a webpage, a personal webpage, a webpage with a virtual post board, an interactive webpage, a blog, an online profile, a webpage on a social network webpage, or any combination thereof.

3. A system according to claim 1 wherein the entity is selected from a group consisting of an individual, a group of individuals, a community, a company, an organization, a department, a machine, an object with a communication capability, a sensor, a building with a communication capability or any combination thereof.

4. A system according to claim 1 wherein the file is selected from a group consisting of a document, an electronic document, an electronic file, a media file, a webpage, an executable file or any combination thereof.

5. A system according to claim 1 wherein the file is retrievable from a remote host, a server, a client computing device, a plurality of client computing devices or any combination thereof.

6. A system according to claim 1 wherein outputting the file to the requester comprises displaying the file to the requester on a display screen, and emitting a sound.

7. A system according to claim 1 wherein the communication means comprises:
a. A means for initiating a synchronous voice communication, selected from a group consisting of a call, a voice call, a video call, a conference call, or any combination thereof,
b. A means for sending a synchronous text communication, selected from a group consisting of an instant message, an interactive message, or any combination thereof,
c. A means for sending an asynchronous voice communication, selected from a group consisting of a voice mail, a voice mail associated with a message, a voice mail associated with an electronic mail, or any combination thereof,
d. A means for sending an asynchronous text communication, selected from a group consisting of a short message service message, an electronic mail, a post on a board of a webpage, or any combination thereof,
e. A means for sending a file,
f. A means for initiating and performing a video communication, such as a video-mail, a video call, an interactive video communication, a game or any combination thereof,
g. A means for accessing/opening a webpage, selected from a group consisting of a personal webpage, a webpage with a virtual post board, an interactive webpage, a blog, an online profile, a webpage on a social network webpage, or any combination thereof.

8. A system according to claim 1 wherein the destination of a synchronous voice communication is a device with a communication capability, said device with a communication capability being adapted:
a. to receive a synchronous voice communication on a webpage, an interactive webpage, a blog, an online profile, a webpage on a social network webpage, an instant messaging software, a voice communication software or any combination thereof.

9. A system according to claim 1 wherein the destination of an asynchronous voice communication is a device with a communication capability, said device with a communication capability being adapted:
a. to receive an asynchronous voice communication on a webpage, an interactive webpage, a blog, an online profile, a webpage on a social network webpage, an instant messaging software, a voice communication software or any combination thereof.

10. A system according to claim 1 wherein to establish a communication comprises obtaining information corresponding to an identifier corresponding to communication destination, an appropriate signalling and a routing of the communication request.

11. A system according to claim 1 wherein the identifier corresponding to communication destination is an identifier associated with an entity.

12. A system according to claim 1 wherein a client computing device is a computer, a desktop computer, a portable computer, a phone, a mobile phone, a smart phone, or a portable digital assistant.

13. A system according to claim 1 wherein the entity to be contacted is associated with a client computing device connected to a communication network, the said client device being adapted:
a. to send a first instruction associated with a communication and receive a second instruction associated with a communication,
b. to accept and take part in the communication.

14. A system according to claim 1 wherein the elaboration of a selection of communications means comprises the consideration of a privacy setting associated with an entity to be contacted.

15. A system according to claim 1 wherein a privacy setting associated with an entity to be contacted corresponds to the privacy setting configured by an entity on a webpage or a webpage on a social network.

16. A system according to claim 1 wherein the client computing device 101 connects to an access network selected from a group consisting of a wired system, a cable network (e.g. DSL, ADSL networks), a power line network, a photonic or optical network (fiber to the x FFTx, FFTN, FFTC, FFTB, FFTH, 802.8, 10 Gigabit Ethernet, Gigabit Ethernet, Synchronous Digital Hierarchy, Synchronous Optical Networking), a Local Area network (Ethernet, 802.3, 802.2, 802.1, 802.4, 802.5, Token Ring), a metropolitan area network (e.g. 802-2001 , 802.6, ATM), a cellular system (2G, 3G, 4G, GSM, GPRS, EDGE, UMTS, CDMA2000, HSPA, LTE, NGN), a wireless local area network (e.g. Wifi, 802.11, , HiperLAN), a wireless metropolitan area network (e.g. 802.16 WiMAX, HiperMAN), a mobile broadband wireless access network (e.g. 802.20), a wireless personal area network (e.g. Bluetooth, Infrared, 802.11, 802.15, UWB), a high attitude platform network, a satellite network (e.g. GPS, GNSS, DVB), a broadcasting network (e.g. television network), a Personal Handy-phone System (PHS) network, a point-to- point network, an ad hoc network, a multi-hop ad hoc network, a peer-to-peer network, a sensor network (e.g. RFID system, near-field communication network), a PSTN network, an ISDN network, an Internet Protocol telephony system, a circuit-switched network, a packet-switched network, a private network, a virtual network or any combination thereof.

17. A method of a communication between a requester and a destination, said method comprising:
a. Outputting a file containing an identifier identifying an entity to the requester;
b. Detecting the identifier identifying an entity,
c. Generating a selection including at least one communication means corresponding to the entity or to the identifier associated with the entity,
d. providing the selection to the requester;
e. receiving from the requester a choice of a communication means among the provided communication means,
f. Initiating the communication between the requester and the destination associated with the entity or with the identifier; and if the communication is established successfully between the requester and the destination associated with the entity or with the identifier,
g. routing the communication towards the destination.

18. A method according to claim 17 wherein initiating a communication comprises:
a. Sending a first instruction associated with a first communication from the client to the server
b. Receiving at the server the first instruction associated with the first communication from the client
c. Processing the first instruction at the server and sending from the server to the client a second instruction associated with the first communication,
d. Receiving at the client the second instruction associated with the first communication,
e. Sending a third instruction associated with the first communication from the server towards the destination.

19. A requester apparatus for a communication between a requester and a destination, said apparatus comprising:
a. A computing device,
b. A communication means for at least one of the following:
i. receiving a file containing an identifier identifying an entity,
ii. sending a first instruction associated with a first communication and receive a second instruction associated with a second communication,
c. A means for outputting the file to the requester,
d. A means for detecting the identifier identifying the entity,
e. A means for generating a selection including at least one communication means corresponding to the entity or to the identifier associated with the entity,
f. A means for providing the selection to the requester among the provided communication means;
g. A means for receiving from the requester a choice of a communication means among the provided communication means,
h. A means for initiating the communication between the requester and the destination associated with the entity or with the identifier;
i. A means for performing the communication towards the destination.

20. A destination apparatus for a communication between a requester and a destination, said apparatus comprising:
a. A computing device,
b. A communication means for :
i. receiving a first instruction associated with a communication and sending a second instruction associated with the communication,
ii. receiving the communication.

21. A server for communication between a requester and a destination, said server comprising:
i. A means for receiving a first instruction associated with the first communication from the requester,
ii. A means for processing the first instruction,
iii. A means for sending to the requester a second instruction associated with the first communication,
iv. A means for sending a third instruction associated with the first communication towards the destination;

22. Integrated circuit (IC) for causing an apparatus to perform a method in accordance with claim 17.

23. A computer program product embodied in a computer-readable medium for causing an apparatus to perform a method in accordance with claim 17.
